# EUROPÄISCHE PATENTANMELDUNG

(11) **EP 1 787 962 A1**
(43) Veröffentlichungstag der Anmeldung: **23.05.2007**
(21) Anmeldenummer: 05025088.5
(22) Anmeldetag: 17.11.2005
(51) Int. Cl.: C02F 1/52, C02F 3/12, C02F 101/10, C02F 1/68

(54) **Verfahren und Vorrichtung zur Reinigung von Abwasser in Kleinkläranlagen, insbesondere zur chemischen Elimination von Phosphor und Phosphorverbindungen.**

(71) Anmelder: Brandenburgische Technische Universität Cottbus, 03046 Cottbus (DE)
(72) Erfinder: Koch, Roland, Prof. Dr.-Ing., 02953 Bad Muskau (DE); Fritz, Hans-Gerhard, Prof. Dr.-Ing., 73066 Uhingen (DE); Ilian, Jens, 03044 Cottbus (DE); Weinmann, Sandra, Dr. rer.-nat., 70794 Filderstadt (DE)
(74) Vertreter: Zinken-Sommer, Rainer

(57) **Zusammenfassung**

Die Erfindung betrifft ein Verfahren und eine Vorrichtung zur Reinigung von Abwasser in Kleinkläranlagen, insbesondere zur Elimination von Phosphor und Phosphorverbindungen, wobei die Reinigung des Abwassers vorzugsweise in mehreren Verfahrensstufen durch eine Vor- und/oder Nachklärung sowie eine biologische Reinigungsstufe durchgeführt wird.
In einer oder mehreren Verfahrensstuten einer Kleinkläranlage wird mit speziellen Kunststoffgranulaten/-compounds gefüllter Reaktor eingesetzt, wobei die Kunststoffgranulate/-compounds sich im Abwasser langsam zersetzen und/oder durch Mikroorganismen abgebaut werden, sodass in den Kunststoffgranulaten/-compounds eingebundene Fällmittel freigegeben werden.
Eine Vorrichtung zur Durchführung des Verfahrens zur Reinigung von Abwasser in Kleinkläranlagen ist ebenfalls ausgeführt.

## Beschreibung

Die Erfindung betrifft ein Verfahren und eine Vorrichtung zur Reinigung von Abwasser in Kleinkiäraniagen, insbesondere zur Elimination von Phosphor und Phosphorverbindungen, wobei die Reinigung des Abwassers vorzugsweise in mehreren Verfahrensstufen durch eine Vor- und/oder Nachklärung sowie eine biologische Reinigungsstufe durchgeführt wird.

Auf kommunaler Ebene stellte der Bau von zentralen Kläranlagen bis vor kurzem das fast ausschließlich verfolgte Ziel der Abwasserpolitik dar. Hauskläranlagen wurden auch in ländlich strukturierten Gebieten häufig nur als zeitlich begrenzte Übergangslösungen bis zum Anschluss an eine Kanalisation zugelassen. Es zeigt sich jedoch zunehmend deutlicher, dass dieses Konzept nicht immer die wirtschaftlichste Lösung darstellt. Inzwischen werden diese Fehler korrigiert und biologische Kleinkläranlagen werden als Dauerlösung zur Abwasserentsorgung zugelassen.

Wichtigstes Ziel der Abwasserentsorgung ist der Gewässerschutz und die Reduzierung der vom Abwasser ausgehenden Gefahren. Diese Ziele sollten mit einem wirtschaftlich vertretbaren Aufwand erreicht werden. Kleinkläranlagen, Anlagen mit einem Schmutzwasserdurchfluss von bis zu 8 m³/d, erhalten daher vom Gesetzgeber bei Ihrer bauaufsichtlichen Zulassung mindestens die Anforderungen, Grenzwerte für CSB < 150 mg und für BSB₅ < 40 mg/l einzuhalten. (Klasse C, Anlagen für Kohlenstoffabbau)

Das notwendige Ausmaß der Abwasserbehandlung ergibt sich aber aus den örtlichen Gegebenheiten und den Erfordernissen des Gewässerschutzes, so dass die für die wasserrechtliche Erlaubnis zuständige Untere Wasserbehörde die Einhaltung zusätzlicher Parameter fordern kann. Insbesondere in wasserschutzrechtlich sensiblen Gebieten ist eine zusätzliche Auflage für den Ablaufparameter Phosphor zu erwarten. In diesem Bereich würden Anlagen der Erweiterung +P (Anlagen für Kohlenstoffabbau mit Phosphoreliminierung) zum Einsatz kommen.

Die Phosphorquellen des häuslichen Abwasser stellen fäkale Ausscheidungen und Waschmittel dar. Die gesetzliche Oberbegrenzung des Phosphorgehaltes für Waschmittel hat eine deutliche Reduzierung der Phosphorfrachten im kommunalen Abwasser erzielt. Dennoch ergibt sich nach heutigen Erkenntnissen im kommunalen Abwasser ein Phosphoranfall von ca. 2 bis 2,5 g/EW*d.

Der größte Teil des Gesamtphosphors liegt gelöst in anorganischer Form als Orthophosphat vor. Ein weiterer Teil liegt organisch gebunden in gelöster und nicht gelöster Form vor.
Phosphor ist neben Stickstoff einer der wichtigsten Pflanzennährstoffe. In aquatischen Lebensräumen stellt Phosphor vielmals den für das Pflanzenwachstum limitierenden Faktor dar. Phosphor ist daher insbesondere beim Gewässerschutz einer der bedeutendsten Faktoren und oftmals eine Hauptursache für die Gewässereutrophierung.

Phosphor gelangt sowohl über Abschwemmung aus landwirtschaftlich genutzten Flächen, als auch über kommunale Abwässer in die Gewässer. Eine Senkung der Phosphorfracht der in Kleinkläranlagen geklärten Wässer stellt daher auch aus Sicht des Gewässerschutzes einen bedeutenden Aspekt dar.

Bekannt ist ein Verfahren und eine Vorrichtung zur Phosphatelimination mittels einer einfachen Dosiereinheit zur Dosierung von Fällmittel in Abwasserbehandlungsanlagen, vorzugsweise in Kleinkläranlagen und kleinen Kläranlagen, bestehend aus einem Behälter zur Bevorratung des Fällmittels, einer Dosiereinheit mit einer Dosierkammer, einer zu- und abführenden Leitung sowie einer Füllleitung und einem Gebläse (DE 103 44 131 A1).
Es erfolgt keine Aussage darüber, welches Fällmittel wie verabreicht wird. Der Inhalt dieser Lösung zielt vorrangig auf die Ausgestaltung der Vorrichtung zur Dosierung ab.

Aus der DE 692 27 243 T2 ist ein Abwasserschacht oder eine Abwasserkleinkläranlage bekannt, deren Wandung aus Hohlprofilen besteht, die zumindest teilweise als Flockungsrohre fungieren, wobei im Schacht oder in der Kläranlage in gelöster Form vorliegender Phosphor nach dem Ausflockungsverfahren ausgeflockt wird. Im Schacht ist weiterhin eine Tauchpumpe am Boden angeordnet.

Bekannt ist ein Verfahren zur Eliminierung von Phosphor und organisch gebundenem Phosphor aus Abwässern und Zulaufwässern durch Fällungsreinigung mit Al-haltigen Fällungsmitteln, wobei das Abwasser oder das Zulaufwasser unter Zusatz einer alkalisch stabilisierten Tonerdelösung mit einem Na₂O/Al₂O₃-Molverhältnis von 1,5 bis 5,0 gereinigt wird (DE 40 25 778 A1). Als alkalisch stabilisierte Tonerdelösung wird ein Fiuid zugesetzt, das durch Lösen von gefälltem Aluminium(hydr)oxid in Alkalilauge hergestellt wurde.

Weiterhin bekannt ist ein Verfahren zur Abtrennung von Phosphaten aus Abwässern durch Simultanfällung, wobei die Zugabe eines Kalkproduktes und einer Aluminiumverbindung und/oder einer Eisenverbindung in Form eines Fällungsmittelgemisches, das einen Gehalt an Al bzw. Fe von 0,2 bis 5 Masse-% bezogen auf die Trockenmasse des Fällungsmittelgemisches aufweist, in den Ablauf einer biologischen Reinigungsstufe und/oder in den Rücklaufschlamm und eine Fällung bei einem pH-Wert von 9 +/- 0,5 vorsieht (DE 43 25 535 C2).

Allen vorgenannten phosphorentfernenden Verfahren ist gemeinsam, dass dieser Vorgang über eine separate Dosiervorrichtung in Verbindung mit einer Bevorratungsvorrichtung mit erheblichen technischen Aufwand sowie Kosten erfolgen muss. Ein Nachrüsten bereits bestehender Kleinkläranlagen ist damit nur schwer oder gar nicht möglich.

Zudem sind Kontakt- und Absorber-Granulate, auch solche auf Basis von Eisenoxiden und/oder Eisenhydroxiden. Sie werden überwiegend in kontinuierlichen Verfahren eingesetzt, wobei sie sich üblicherweise in turm- bzw. kolonnenartigen Apparaten befinden, die von dem zu behandelnden Medium durchströmt werden, und an der äußeren und inneren Oberfläche der Granulate finden die chemischen bzw. physikalischen Reaktions- und Absorptionsprozesse statt. Zu diesem Zweck können pulverförmige Materialien nicht eingesetzt werden, weil sie sich in Fließrichtung des Mediums verdichten und dadurch den Strömungswiderstand bis zur Blockierung des Apparates erhöhen. Wird ein Apparat durch Rückspülung gereinigt, werden große Mengen des Pulvers ausgetragen, gehen verloren bzw. führen zu einer nicht tolerierbaren Belastung des Abwassers.

Der Erfindung liegt die Aufgabe zugrunde, für den Bereich der Kleinkläranlagentechnik eine Möglichkeit der Phosphoreliminierung, welche auf einer kostengünstigen, wartungsarmen und kontinuierlichen Fällmittelfreisetzung beruht, zu entwickeln. Die Fällmittelfreisetzung soll eigenständig und ohne technische Hilfsmittel, wie Dosier- und Lagervorrichtungen, erfolgen.
Die zu schützende Lösung soll es Kleinkläranlagenherstellern ermöglichen, ihre auf den Kohlenstoffabbau ausgelegten Anlagen um eine Verfahrenseinheit zu erweitern, die zusätzlich die Einhaltung des Ablaufparameters Phosphor sicherstellt.

Dies wird erfindungsgemäß dadurch erreicht, dass
in einer oder mehreren Verfahrensstufen einer Kleinkläranlage ein mit speziellen Kunststoffgranulaten/-compounds gefüllter Reaktor eingesetzt wird, wobei die Kunststoffgranulate/-compounds sich im Abwasser langsam zersetzen und/oder durch Mikroorganismen abgebaut werden, sodass in den Kunststoffgranulaten/-compounds eingebundene Fällmittel freigegeben werden.

Grundlage des Verfahrens stellt das aus dem kommunalen Kläranlagenbereich an sich bekannte Verfahren der chemischen Phosphorelimination dar. Die im Abwasser enthaltenen gelösten Phosphationen werden hierbei durch mehrwertige Metallionen in eine schwer lösliche Form überführt, die mit dem Belebtschlamm in der Nachklärung zur Sedimentation gebracht und mit dem Überschussschlamm gelagert werden kann.
Zahlreiche mehrwertige Metallionen (Me³⁺) bilden mit den im Abwasser gelösten Phosphationen (PO₄³⁻) schwer lösliche Verbindungen. In der zu schützenden Phosphor- Eliminationsmöglichkeit wird Aluminiumsulfat verwendet. Ein besonderer Vorteil ist die sichere und dauerhafte Fixierung des gefällten Phosphors in der Vorklärung einer Kleinkläranlage.
Das Aluminiumsalz (Aluminiumsulfat) wird erfindungsgemäß in überraschender und sehr wirkungsvoller Art und Weise nach dem Prinzip der Simultanfällung kontinuierlich und ohne Dosiervorrichtung direkt in der Belebung freigesetzt. Das freigesetzte Aluminiumsulfat löst und verteilt sich durch die Belüftung in der gesamten Belebung und bildet nach folgender Gleichung ein schwer wasserlösliches Phosphat.

Al₂(SO₄)_{3*} 18 H₂O + 2 PO₄³⁻ → 2 AlPO₄↓ + 3 SO₄²⁻ + 18 H₂O GL 1

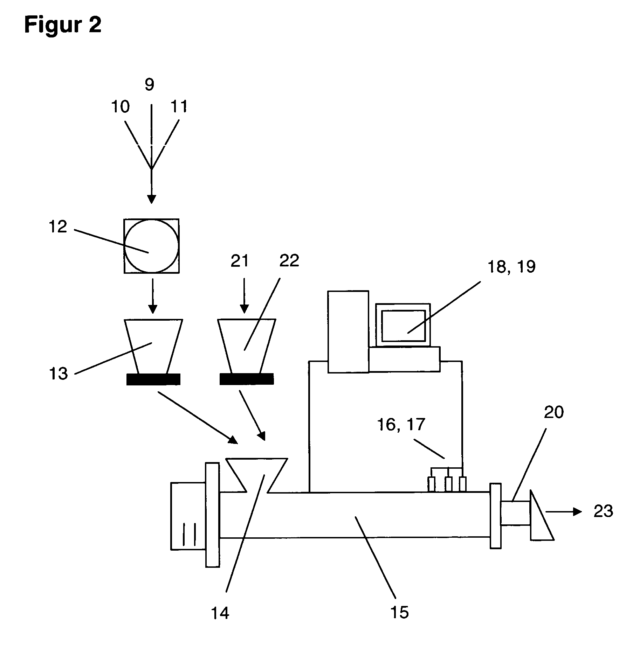

Dies ist erfindungsgemäß durch eine Einbindung von Fällungsmitteln in eine abbaubare Kunststoffmatrix möglich.
Als Kunststoffmatrix, in der als Fällungsmittel phosphatfällende Salze, wie insbesondere Aluminiumsalze eingebunden werden, kommen Polyester, wie z.B. Polylactide (PLA), Polyesterurethane (TPU) oder Polycaprolactone (PCL) in Frage. Der Vorteil dieser Polyester ist, dass sie durch Hydrolyse abgebaut werden können. Dabei können hinreichend hohe Abbauraten über eine Steigerung der Hydrolysegeschwindigkeit erzielt werden, wie z.B. durch Erniedrigen der Kristallinität, der Molmasse sowie der Erhöhung der Anzahl an Esterbindungen im Polymeren. Eine weitere Möglichkeit die Hydrolyseempfindlichkeit und somit die Abbauraten der Polyester zu steigern, ist die Copolymerisation mit hydrophilen Polymeren wie z.B. mit Polyalkoholen oder das Blenden mit nativen und thermoplastischen Stärken (TPS). So lässt sich z.B. die Hydrolyseempfindlichkeit und vor allem die Abbaurate von Polyesterurethanen durch den Zusatz von thermoplastischer Stärke drastisch erhöhen, da die Stärke in diesem Fall als Kohlenstoffquelle dient.
Die durch Hydrolyse gespaltenen niedermolekularen Kettenbruchstücke können dann von den Zellen in einer biologisch aktiven Umgebung aufgenommen und in die Stoffwechselvorgänge einbezogen werden. Ein Beispiel für ein Polymer, dessen Abbau im ersten Schritt rein hydrolytisch erfolgt, ist das Polylactid (PLA), das bis hin zur Milchsäure abgebaut und dann sehr schnell mineralisiert wird.
Ein weiterer Vorteil in der Verwendung von Polyestern liegt darin, dass diese Polymere eine Dichte >1 g/cm³ aufweisen und somit ein Austrag der Partikel aus dem Reaktor durch Aufschwimmen oder während des Belüftens des Reaktors ausgeschlossen werden kann.
Ausgehend vom Dimer, dem Lactid, wird - wie in Figur 2 dargestellt ist - das Lactid über eine Ringöffnungspolymerisation unter Verwendung eines gleichsinnig drehenden dichtkämmenden Zweiwellenextruders zum Polylactid umgesetzt. Für die Generierung der PLA-Copolymere kann dasselbe Verfahrenskonzept verwendet werden.
Die Herstellung von Compounds aus den jeweiligen Polyestern und z.B. Stärke erfolgt ebenfalls mittels eines gleichsinnig drehenden dichtkämmenden Zweiwellenextruders. Durch Erstellen eines individuell auf die Polymere und den Füllstoff konzipiertes Schneckenkonzeptes ist es möglich, einen homogenen Compound zu generieren.

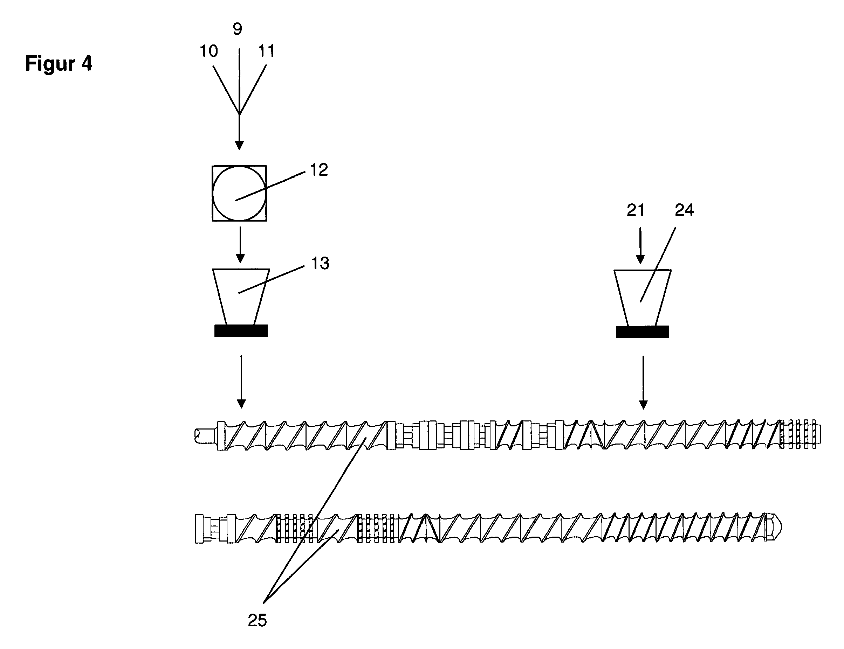

Das Aluminiumsalz wird in einem weiteren Schritt den jeweiligen Homo- bzw. Copolymeren sowie den Compounds mittels eines Extruders zudosiert. Auch hier sorgt ein speziell dafür entwickeltes Schneckenkonzept für eine homogene Verteilung des Saizes im Kunststoff. Prinzipiell können dazu Ein- und Zweiwellenextruder verwendet werden. Vorteilhaft wird ein Zweiwellenextruder sein. Das Schneckenkonzept ist für jeden zu verwendenden Kunststofftyp neu zu optimieren und entsprechend unterschiedlich. Eine mögliche Schneckenkonfiguration ist in Figur 4 gezeigt. Bei diesem Beispiel wird die verwendete Kunststoffmatrix dem Extruder in der gekühlten Einzugszone zugeführt. Die im weiteren Verlauf der Schnecke angeordneten Knetelemente sichern den für die vollständige Plastifizierung der Kunststoffmatrix notwendigen Eintrag von Scherenergie. Anschließend an die Plastifizierung erfolgt die Zugabe des Aluminiumsalzes und bei Bedarf der nativen oder thermoplastischen Stärke in diesem Beispiel mit Hilfe eines Seitenstromdosierers. Durch Mischelemente und Kombinationen aus Misch- und Knetelementen wird eine homogene Einarbeitung des Aluminiumsalzes und der Stärke in die Kunststoffschmelze gewährleistet. Die exakte Anordnung der unterschiedlichen Funktionselemente muss in Abhängig von der Art der Kunststoffmatrix, dem Stärkegehalt und dem Gehalt an Aluminiumsalz jeweils optimiert werden.

Die das Aluminiumsalz enthaltenden Kunststoffe werden im Anschluss an die Extrusion durch Granulierung in kleine feste Partikel geschnitten. Kugelförmige oder zylinderförmige Kunststoffkörper in einer definierten Größe bis 5 cm oder zylinderförmige Kunststoffkörper können auch mittels Spritzguss hergestellt werden.

Der Gehalt an Aluminiumsalz hängt ab von der benötigten Menge für den Fällungsprozess, von der Geschwindigkeit, mit welcher das Salz aus der Kunststoffmatrix extrahiert wird und von der Abbaugeschwindigkeit des Kunststoffes. Auch hier werden die Gehalte von der Art und den molekularen Parametern des verwendeten Kunststoffes abhängen. Gehalte von 10 bis 60% Aluminiumsalz am Gesamtvolumen erscheinen erzielbar.

Für die Zudosierung des Aluminiumsalzes in den vorzugsweisen Zweischneckenextruder gibt es verschiedene Möglichkeiten:
1. Sowohl der Kunststoff als auch das Salz werden dem Extruder in der Einzugszone mit separaten Dosierern zugeführt.
2. Das Aluminiumsalz wird vor dem Dosieren in den Extruder mit dem Kunststoff gemischt. Um eine Trennung dieses Gemisches bei dem Dosiervorgang zu vermeiden, muss evtl. eine geringe Menge eines biologisch abbaubaren Haftöls hinzugefügt werden.
3. Nur der Kunststoff oder ein Teil des Kunststoffes werden dem Extruder in der Einzugszone hinzugefügt. Das Aluminiumsalz oder ein Teil des Kunststoffes gemischt mit dem Aluminiumsalz werden dann über einen Seitenstromdosierer dem Extruder an einer Stelle, an der die Polymermatrix bereits erschmolzen vorliegt, der Extruderschnecke hinzugefügt.

Die Kunststoffkörper werden in einen in der Abwasserbehandlungsanlage befindlichen Reaktor gefüllt. Der Reaktor kann hierbei beispielsweise in der biologischen Stufe angeordnet werden. Der Reaktor ist vorzugsweise zylindrisch ausgebildet. Er weist im unteren Bereich eine Einströmöffnung sowie im oberen Bereich eine Ausströmöffnung auf. Im unteren Bereich des Reaktors befindet sich zudem eine Belüftungsvorrichtung. Diese belüftet intermittierend den Reaktor, so dass eine Durchströmung des Reaktors entsteht, die gelöste Aluminium-Ionen (Al³⁺) freisetzt. In der biologischen Stufe kommt es durch die freigesetzten Ionen zur Phosphatfällung (GL 1). Die Belüftung des Reaktors sorgt einerseits für die Durchströmung, stellt aber anderseits auch eine Möglichkeit dar, den Reaktor vor einem Zusetzen mit Belebt- bzw. Sekundärschlamm zu bewahren. Zudem kommt es auch innerhalb des Reaktors zur Fällung des Phosphates. Die durch die Belüftung erzeugte Durchströmung wird ebenfalls auch die entstandenen Fällungsprodukte aus dem Reaktor entfernen.

### Ausführungsbeispiel

Anhand eines Ausführungsbeispieles soll nachstehend die Erfindung näher erläutert werden.
Dabei zeigen:
- Figur 1 - den in die Kleinkläranlage einzusetzenden Reaktor im Schnitt
- Figur 2 - das Verfahrenskonzept zur Herstellung und Anreicherung der Kunststoffgranulate dargestellt am Beispiel der Herstellung von Polylactid
- Figur 3 - eine Kleinkläranlage mit Reaktor Biologie - Nach klärung im Schnitt
- Figur 4 - die Zugabe des Fällmittels im Bereich der Plastifizierung des Extruders

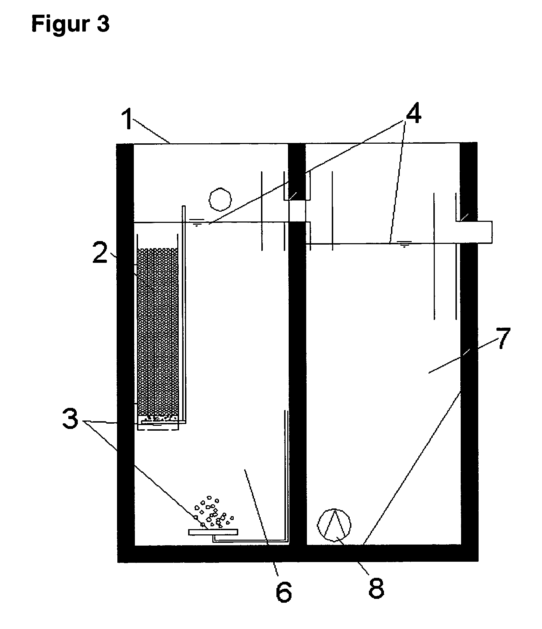

Nachfolgend wird die Installation in einer konventionellen Kleinkläranlage 1 nach dem Belebtschlammverfahren mit Vorklärung, biologischer Stufe 6 und Nachklärung 7 aufgezeigt.
Die Kleinkläranlage 1 ist in Figur 3 im Schnitt Biologie - Nachklärung dargestellt. Der Reaktor 2 ist hierbei im biologischen Teil der Anlage befestigt und wird mit der Druckluft des Belüftungssystems 3 der Anlage versorgt. Eine Anbringung mittels eines Bügelsystems, mit welchem der Reaktor an einer Trennwand innerhalb der Anlage befestigt werden könnte, ist ebenfalls möglich. Die Druckluft wird intermittierend dem Reaktor 2 und der biologischen Stufe 6 für die Stoffwechselprozesse der Bakterien zugeführt. Eine Beeinträchtigung des Klärprozesses findet nicht statt, da eine Durchmischung des Reaktors mit mindestens 1h pro Tag ausreichend erscheint. Das Fällmittel wird durch die Durchströmung des Reaktors in die biologische Stufe ausgetragen und führt die Fällung entsprechend GL1 durch. Die Fällungsprodukte werden in der Nachklärung 7 zur Sedimentation gebracht und mit der Schlammräumung 8 in der Vorklärung gelagert.

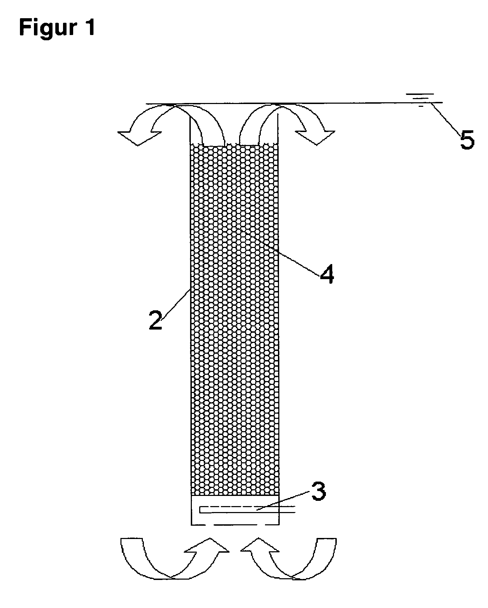

Der Reaktor 2 ist zylindrisch ausgebildet und weist in seinem unteren Bereich die Druckluftzufuhr 3 auf (Figur 1). In seinem Inneren besitzt er eine Packung von Kunststoffgranulat und/oder - compounds 4. Er wird ca. 6 cm unter dem Wasserspiegel 5 der Kleinkläranlage 1 angeordnet. In einer beispielsweisen Ausgestaltung für ein Einfamilienhaus mit 4 Personen ist er 0,8 m hoch und 0,3 m breit auszuführen.

Das Verfahrenskonzept zur Herstellung von Kunststoffgranulaten und/odercompounds gemäß Figur 2 beschreibt, wie Lactid 9 als Reaktionsprodukt zweier Milchsäuremoleküle über eine Ringöffnungspolymerisation zu einem ringförmigen Polylactid umgewandelt wird, weiches für eine schnelle Hydrolysegeschwindigkeit (Abbaureaktion → Auflösung) besonders gut geeignet ist.
Dabei werden Lactid 9, ein Stabilisator 10 und ein in Toluol gelöstes Katalysator-Cokatalysator-System 11 in einen Mischer 12 gegeben und homogenisiert. Das Gemisch wird einer Differentialdosierwaage 13 aufgegeben, wonach es dem Aufgabetrichter 14 im Eingangsbereich eines Zweiwellenextruders 15 zugeführt wird. Im Zweiwellenextruder 15 erfolgt die Ringöffnungspolymerisation zu Polylactid 23. Zur Prozesssteuerung in diesem Extruder 15 sind an seiner Wandung Drucksensoren 16 und Temperatursensoren 17 angeordnet, die mit der Steuerung 18 und der Prozessregelung 19 verbunden sind. Am Ausgang des Zweiwellenextruders 15 ist der Statikmischer 20 angeordnet, aus dem das Polylactid 23 als homogenes Compound in der gewünschten Größe austritt.
Die Zugabe des Fällmittels 21 kann mittels einer zweiten Dosierwaage 22 in den Aufgabetrichter 14 oder bereits zu den Ausgangsstoffen vor dem Mischer 12 oder über einen in Figur 4 dargestellten Seitenstromdosierer 24 im mittleren Bereich des Zweiwellenextruders 15 im Bereich der bereits erschmolzenen Polymermatrix zur speziell gestalteten Mischschnecke 25 zugegeben werden.
Durch Mischelemente und Kombinationen aus Misch- und Knetelementen wird eine homogene Einarbeitung des Aluminiumsalzes und der Stärke in die Kunststoffschmelze gewährleistet. Die exakte Anordnung der unterschiedlichen Funktionselemente muss in Abhängig von der Art der Kunststoffmatrix, dem Stärkegehalt und dem Gehalt an Aluminiumsalz jeweils optimiert werden.

### Liste der verwendeten Bezugszeichen

1 - Kleinkläranlage
2 - Reaktor
3 - Druckluftzufuhr
4 - Kunststoffgranulat/-compound
5 - Wasserspiegel
6 - biologische Stufe
7 - Nachklärung
8 - Überschuss- Rücklaufschlammförderung
9 - Lactid
10 - Stabilisator
11 - Katalysator-Cokatalysator-System
12 - Mischer
13 - Differentialdosierwaage
14 - Aufgabetrichter
15 - Zweiwellenextruder
16 - Drucksensor
17 - Temperatursensor
18 - Steuerung
19 - Prozessregelung
20 - Statikmischer
21 - Fällmittel
22 - Dosierwaage
23 - Polylactid
24 - Seitenstromdosierer
25 - Mischschnecke

## Patentansprüche

1. Verfahren zur Reinigung von Abwasser in Kleinkläranlagen, insbesondere zur Elimination von Phosphor und Phosphorverbindungen, wobei die Reinigung des Abwassers vorzugsweise in mehreren Verfahrensstufen durch eine Vor- und/oder Nachklärung sowie eine biologische Reinigungsstufe durchgeführt wird,
**gekennzeichnet dadurch, dass** in eine oder mehrere Verfahrensstufen einer Kleinkläranlage (1) ein mit speziellen Kunststoffgranulaten/-compounds (4) gefüllter Reaktor (2) eingesetzt wird, wobei die Kunststoffgranulate/-compounds (4) sich im Abwasser langsam zersetzen und/oder durch Mikroorganismen abgebaut werden, sodass in den Kunststoffgranulaten/-compounds (4) eingebundene Fällmittel freigegeben werden.

2. Verfahren nach Anspruch 1, **gekennzeichnet dadurch, dass** als Fällmittel phosphatfällende Metallsalze verwendet werden.

3. Verfahren nach Anspruch 1 und 2, **gekennzeichnet dadurch, dass** als Fällmittel Aluminiumsalze, vorzugsweise Aluminiumsulfat verwendet werden.

4. Verfahren nach Anspruch 1 bis 3, **gekennzeichnet dadurch, dass** die Fällmittel in die Matrix der zu verwendenden Kunststoffe eingebunden werden.

5. Verfahren nach Anspruch 1 bis 4, **gekennzeichnet dadurch, dass** als Kunststoffausgangsstoffe für die Granulate und/oder Compounds Polyester, insbesondere Polylactide (PLA) oder Polyesterurethane (TPU) oder Polycaprolactone (PLC) verwendet werden.

6. Verfahren nach Anspruch 1 bis 5, **gekennzeichnet dadurch, dass** die Kunststoffgranulate/-compounds (4) in wäßriger Lösung in der Kleinkläranlage (1) langsam durch Hydrolyse abgebaut werden.

7. Verfahren nach Anspruch 1 bis 6, **gekennzeichnet dadurch, dass** zur Erhöhung der Hydrolysegeschwindigkeit die Kristallinität und/oder die Molmasse erniedrigt und/oder die Anzahl der Esterbindungen im Polymeren erhöht wird.

8. Verfahren nach Anspruch 1 bis 7, **gekennzeichnet dadurch, dass** zur Erhöhung der Hydrolysegeschwindigkeit eine Copolymerisation mit hydrophilen Polymeren, insbesondere mit Polyalkoholen oder ein Blenden mit nativen und/oder thermoplastischen Stärken durchgeführt wird.

9. Verfahren nach Anspruch 5, 6 und 8, **gekennzeichnet dadurch, dass** die Hydrolysegeschwindigkeit speziell von Polyesterurethanen durch die Zugabe einer thermoplastischen Stärke erhöht wird.

10. Verfahren nach Anspruch 1 bis 9, **gekennzeichnet dadurch, dass** das Polylactid (PLA) aus Lactid (6) über eine Ringöffnungspolymerisation unter Verwendung eines vorzugsweise gleichsinnig drehenden, dichtkämmenden Ein- oder Zweiwellenextruders (12) hergestellt wird.

11. Verfahren nach Anspruch 1 bis 10, **gekennzeichnet dadurch, dass** das Lactid (6), mit einem Stabilisator (7) sowie einem in Lösungsmittel gelösten Katalysator-Cokatalysator-System (8) vermischt und anschließend dieses Gemisch über eine Differentialwaage (10) einem Druck- (13) und Temperatursensoren (14) sowie eine Steuerungs- (15) und Prozessregelung (16) aufweisenden Ein- oder Zweiwellenextruder (12) aufgegeben sowie in einem Statikmischer (17) zu Polylactid vermischt wird.

12. Verfahren nach Anspruch 1 bis 10, **gekennzeichnet dadurch, dass** die Herstellung von Granulaten und/oder Compounds aus Polyestern und Stärke mittels eines vorzugsweise gleichsinnig drehenden, dichtkämmenden Ein- oder Zweiwellenextruders (12) realisiert wird.

13. Verfahren nach Anspruch 1 bis 12, **gekennzeichnet dadurch, dass** dem Ein- oder Zweiwellenextruder (12) das Fällmittel (21) zudosiert wird.

14. Verfahren nach Anspruch 1 und 13, **gekennzeichnet dadurch, dass** das Fällmittel (21) dem Ein- oder Zweiwellextruder (12) in der Eingangszone mit einem separaten Dosierer (19) zugeführt wird.

15. Verfahren nach Anspruch 1 und 13, **gekennzeichnet dadurch, dass** das Fällmittel (21) mit dem Kunststoffausgangsmaterial vor dem Ein- oder Zweiwellextruder (12) gemischt und diesem gemeinsam aufgegeben wird.

16. Verfahren nach Anspruch 1 und 13, **gekennzeichnet dadurch, dass** das Kunststoffausgangsmaterial oder ein Teil des Kunststoffausgangsmaterials dem Ein- oder Zweiwellextruder (12) in der Eingangszone zudosiert wird und das Fällmittel (21) sowie ggf. der andere Teil des Kunststoffausgangsmaterials mit dem Fällmittel (21) vermischt dem Extruder (12) über einen Seitenstromdosierer (24) zugegeben werden.

17. Verfahren nach Anspruch 1 bis 16, **gekennzeichnet dadurch, dass** die Kunststoffe und das Fällmittel (21) im Ein- oder Zweiwellenextruder (12) mittels eines spezielles Mischschneckenkonzeptes, welches eine Kombination von Misch- und/oder Knetelementen aufweist, vermischt werden.

18. Verfahren nach Anspruch 1 bis 17, **gekennzeichnet dadurch, dass** die Fällmittel (21) enthaltenden Kunststoffe im Anschluss an die Extrusion durch Granulierung in kleine feste Partikel geschnitten oder gepresst oder anderweitig geformt werden.

19. Verfahren nach Anspruch 1 bis 18, **gekennzeichnet dadurch, dass** das die Fällmitteln (21) enthaltenden Kunststoffkörper mittels Spritzguss hergestellt werden.

20. Verfahren nach Anspruch 1 bis 19, **gekennzeichnet dadurch, dass** das die Fällmittel (21) enthaltenden Kunststoffkörper in Größen bis zu max. 5 cm Durchmesser in Kugel- oder Zylinderform oder in ähnlichen Formen hergestellt werden.

21. Verfahren nach Anspruch 1 bis 20, **gekennzeichnet dadurch, dass** der mit den speziellen Kunststoffgranulaten/-compounds (4) gefüllte Reaktor (2) in seinem unteren Bereich mittels Druckluft (3) stetig oder zyklisch beströmt wird.

22. Verfahren nach Anspruch 1 bis 21, **gekennzeichnet dadurch, dass** der Reaktor (2) sowohl in Neuanlagen wie auch in Altanlagen eingesetzt wird.

23. Vorrichtung zur Durchführung des Verfahrens gemäß Anspruch 1 bis 22 zur Reinigung von Abwasser in Kleinkläranlagen, insbesondere zur Elimination von Phosphor und Phosphorverbindungen, wobei die Kleinkläranlage verschieden Teilbereiche, vorzugsweise eine Vor- und/oder Nachklärung sowie eine biologische Stufe aufweist,
**gekennzeichnet dadurch, dass** in mindestens einer Stufe der Kleinkläranlage (1) ein mit speziellen Kunststoffgranulaten/-compounds (4) gefüllter Reaktor (2) angeordnet ist, wobei in den Kunststoffgranulaten/-compounds (4) ein Fällmittel eingebunden ist.

24. Vorrichtung nach Anspruch 23, **gekennzeichnet dadurch, dass** der mit den speziellen Kunststoffgranulaten/-compounds (4) gefüllte Reaktor (2) vorzugsweise zylindrisch ausgebildet ist und im unteren Bereich eine Einströmöffnung sowie im oberen Bereich eine Ausströmöffnung aufweist.

25. Vorrichtung nach Anspruch 23 und 24, **gekennzeichnet dadurch, dass** die Füllmenge des Reaktors (2) mit Kunststoffgranulaten/-compounts (4) abhängig von der Anzahl der zum jeweiligen Haushalt gehörenden Personen ist.

26. Vorrichtung nach Anspruch 23 bis 25, **gekennzeichnet dadurch, dass** der Reaktor (2) vorzugsweise im Rahmen einer regulären Wartung der Kleinkläranlage mit neuen Kunststoffgranulaten/-compounts (4) nachzufüllen ist.

27. Vorrichtung nach Anspruch 23 bis 26, **gekennzeichnet dadurch, dass** der Ein- oder Zweiwellenextruder (12) eine oder zwei spezielle Mischschnecken (25) aufweist, wobei die Mischschnecke (25) aufeinander abgestimmte Misch- und/oder Knetelemente besitzt.
